Europäisches Patentamt

European Patent Office

Office européen des brevets

(11) Veröffentlichungsnummer: **0 297 043 B1**

(12) **EUROPÄISCHE PATENTSCHRIFT**

(45) Veröffentlichungstag der Patentschrift: **02.12.92**

(21) Anmeldenummer: **88810409.8**

(22) Anmeldetag: **15.06.88**

(51) Int. Cl.⁵: **B62D 13/04**

(54) **Hydraulische Lenkübertragungseinrichtung.**

(30) Priorität: **18.06.87 CH 2306/87**

(43) Veröffentlichungstag der Anmeldung:
**28.12.88 Patentblatt 88/52**

(45) Bekanntmachung des Hinweises auf die
Patenterteilung:
**02.12.92 Patentblatt 92/49**

(84) Benannte Vertragsstaaten:
**AT BE CH DE ES FR GB IT LI NL SE**

(56) Entgegenhaltungen:
**CH-A- 284 236**
**CH-A- 481 784**
**FR-A- 2 225 014**

(73) Patentinhaber: **LANZ + MARTI AG**
**Zeughausstrasse 1**
**CH-6210 Sursee(CH)**

(72) Erfinder: **Marti, Robert**
**Sonnhaldestrasse 9**
**CH-6210 Sursee(CH)**

(74) Vertreter: **Groner, Manfred et al**
**Patentanwalts-Bureau Isler AG Postfach**
**6940**
**CH-8023 Zürich(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung nach dem Oberbegriff des unabhängigen Patentanspruchs 1.

Eine Einrichtung dieser Art ist aus der CH-A-284 236 bekannt. Diese Schrift zeigt in den Figuren 1 bis 5 mehrere Ausführungen einer Lenkvorrichtung, bei welcher das Ausschlagen der Hinterräder beim Lenken gegenüber den Vorderrädern verzögert beginnt. Bei sämtlichen Ausführungen wäre jedoch die Betriebssicherheit nicht den heutigen Anforderungen entsprechend, da im Fall einer Undichtigkeit in einer hydraulischen Leitung die Lenkübertragung ausfallen würde. Die Betriebssicherheit könnte durch eine einfache Verdoppelung der Zahl der Zylinder und die Schaffung einer Zwei-Kreis-Einrichtung verbessert werden. Dies würde jedoch einen ausserordentlichen hohen Raumbedarf sowie eine hohe Gewichtszunahme bedeuten.

Der Erfindung kann somit die Aufgabe vorangestellt werden, eine gattungsbildende, hydraulische Lenkübertragungseinrichtung derart weiterzubilden, dass trotz wesentlich höherer Betriebssicherheit ein einfacher Aufbau bei gleichzeitiger Gewichts- und Platzersparnis gewährleistet ist.

Diese Aufgabe wird durch die Erfindung gemäss Anspruch 1 gelöst.

Ausführungsbeispiele der Erfindung werden nun anhand von Zeichnungen näher erläutert. Es zeigen:

Fig. 1    eine schematische Teilansicht eines Kraftfahrzeuganhängers,

Fig. 2    eine schematische Ansicht der Unterseite des Kraftfahrzeuganhängers,

Fig. 3    eine schematische Draufsicht auf einer erfindungsgemässen Einrichtung, und

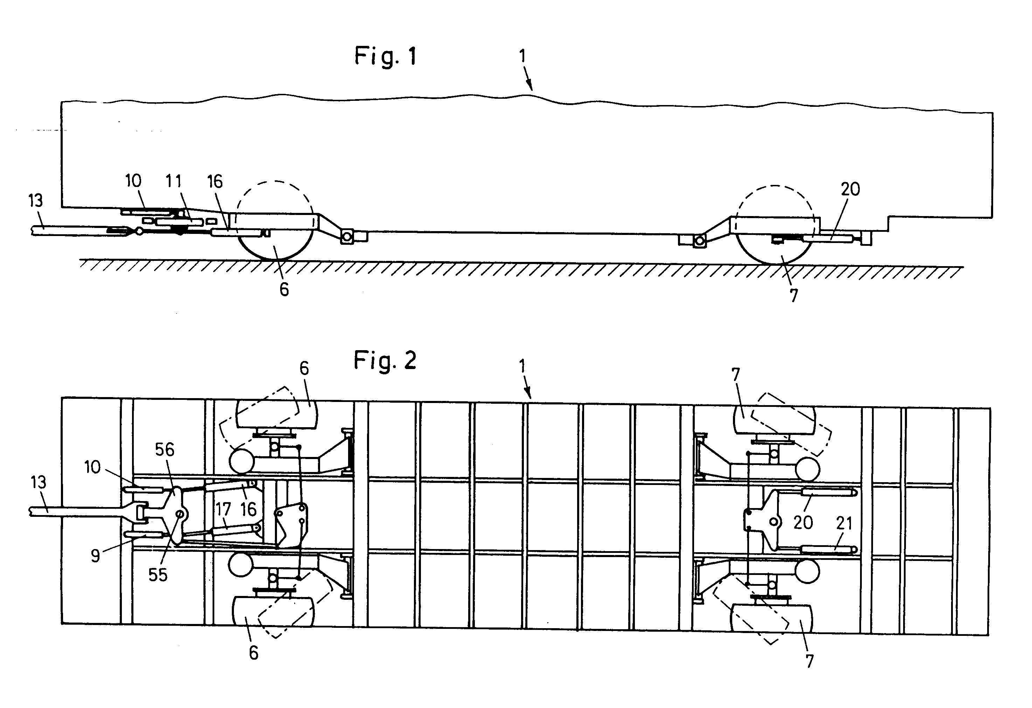

Die Fig. 1 und 2 zeigen einen Kraftfahrzeuganhänger 1, der einen mittels einer Deichsel 13 lenkbaren vorderen Radsatz 6 und einen lenkbaren rückwärtigen Radsatz 7 aufweist. Die Deichsel 13 ist mit um einen Drehpunkt 55 verschwenkbaren Betätigungsflügeln 56 verbunden, die ihrerseits Geberzylinder 16 und 17 und in an sich bekannter Weise Spurstangen betätigen. Die Geberzylinder 16 und 17 übertragen die Lenkeinschläge des vorderen Radsatzes 6 über zwei Hydraulikkreise 2 und 3 gegensinnig und verzögert auf den rückwärtigen Radsatz 7, der mittels zweier Nehmerzylinder 20 und 21 betätigt wird. Wie die Fig. 2 zeigt, sind die Zylinder 16, 17 und 20, 21 sowie 9, 10 jeweils zylinderseitig am Fahrzeuggestell angelenkt.

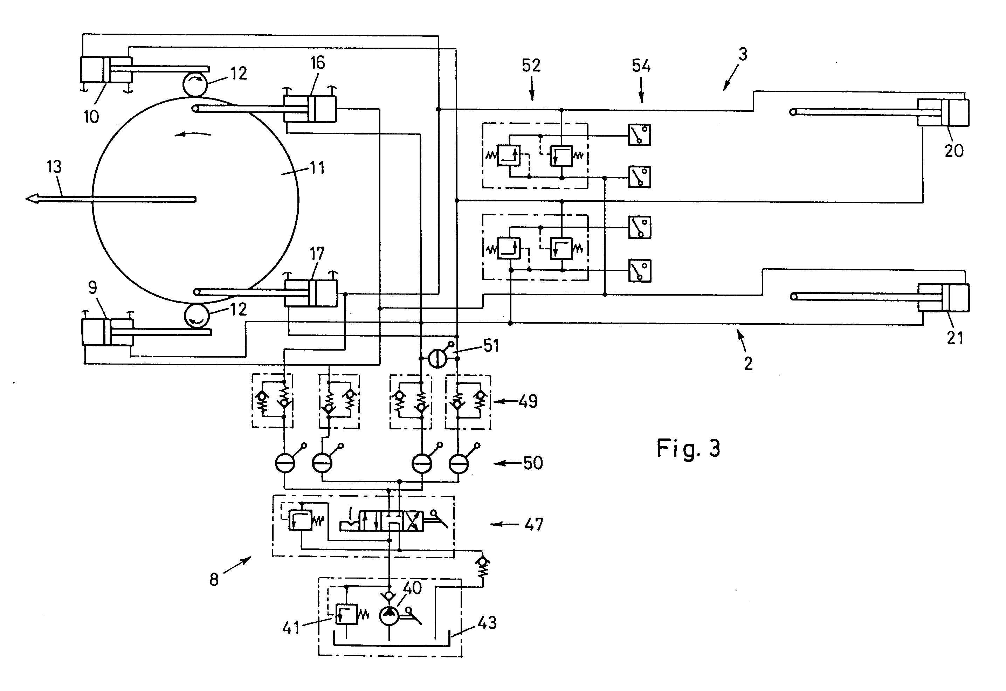

Gemäss Fig. 3 wird das Hydraulikmedium aus einem Tank 43 durch eine Handpumpe 40 den Hydraulikkreisen 2 und 3 eingespiesen, wobei eine Steueranordnung 8 mit Vorspannrückschlagventilen 49 und Kugelhänen 50 sowie einem 4/3-Wege-Ventil mit eingebautem Druckbegrenzungsventil 47 zwischengeschaltet ist. Ein Ausgleichshahn 51 dient zum Geradstellen der Hinterräder, falls dies einmal erforderlich sein sollte. Die Einrichtung kann eine bekannte Drucküberwachung aufweisen. Aus Sicherheitsgründen sind die Hydraulikkreise 2 und 3 jeweils doppelt ausgelegt.

Die Lenkverzögerung erfolgt bei der in den Fig. 1 bis 3 gezeigten Ausführung mittels Ausgleichs- oder Variationszylindern 9 und 10, deren Kammern wie in Fig. 3 gezeigt, jeweils mit einem Geberzylinder 16 bzw. 17, einem Nehmerzylinder 20 bzw. 21 sowie mit der Steuerschaltung 8 verbunden sind. Die Ausgleichszylinder 9 und 10 werden bei einer Auslenkung der Deichsel 13 zwangsweise über die Nockenscheiben 11 und 12 betätigt.

## Patentansprüche

1.   Hydraulische Lenkübertragungseinrichtung für einen Kraftfahrzeuganhänger (1), mit einem die Lenkeinschläge des einen Radsatzes (2) über hydraulische Zylinder-Kolben-Einheiten (16,17,20,21) auf den anderen Radsatz (7) übertragenden Hydraulikkreis (2,3,8), mit einer die Uebertragung der Lenkeinschläge verzögernde Vorrichtung und einem mit der Deichsel (13) verbundenes Getriebe (11,12) zum Antrieb von Ausgleichszylindern (9,10) und Geberzylindern (16,17) in festem Uebersetzungsverhältnis, dadurch gekennzeichnet, dass sie eine 2-Kreis-Einrichtung ist, dass die Zylinder-Kolben-Einheiten doppelwirkende Zylinder sind, dass die Lenkeinschläge des vorderen Radsatzes (6) über die beiden Hydraulikkreise (2, 3) gegensinnig auf den rückwärtigen Radsatz (7) übertragen werden und dass zwei Ausgleichszylinder (9,10) vorgesehen sind, die gleichzeitig und gegensinnig von einer gemeinsamen Nockenscheibe (11) des Getriebes (11,12) angetrieben sind.

## Claims

1.   Apparatus for the hydraulic steering transmission of a motor-vehicle trailer (1), having a hydraulic circuit (2, 3, 8) for transmitting, by means of hydraulic cylinder-piston units (16, 17, 20, 21), the steering locks of one set of wheels (6) to the other set of wheels (7), having a device for delaying the transmission of the steering locks as well as a gearing unit (11, 12) connected with a pole (13) to drive counterbalance cylinders (9, 10) and transmitting cylinders (16, 17) with a fixed transmission ratio, characterised in that it is a 2-circuit apparatus, that the cylinder-piston units are double-acting cylinders, that the steering locks of the front set of wheels (6) are transmitted opposedly to the rear set of wheels (7) by means of the two hydraulic circuits (2, 3, 8), and that two counterbalance cylinders (9, 10) are provided which are driven simultaneously and opposedly by a common cam disk (11) of the gearing unit (11, 12).

**Revendications**

1.  Dispositif hydraulique de transmission d'un angle de direction pour une remorque (1) de véhicule automobile, avec un circuit hydraulique (2, 3, 8) transmettant, par l'intermédiaire d'ensembles cylindre-piston (16, 17, 20, 21), les braquages d'un jeu de roues (6) sur l'autre jeu de roues (7), avec un dispositif retardant la transmission des braquages, et avec un mécanisme de transmission (11, 12) relié au timon (13) et destiné à entraîner des cylindres compensateurs (9, 10) et des cylindres émetteurs (16, 17) dans un rapport de démultiplication fixe, **caractérisé** en ce qu'il s'agit d'un dispositif à 2 circuits, en ce que les ensembles cylindre-piston sont des cylindres à double effet, en ce que les braquages du jeu de roues avant (6) sont transmis, par l'intermédiaire des deux circuits hydrauliques (2, 3), en sens contraires sur le jeu de roues arrière (7), et en ce que deux cylindres compensateurs (9, 10) sont prévus, qui sont entraînés simultanément et en sens contraires par un disque à cames (11) du mécanisme de transmission (11, 12).

## Fig. 1

1

10  11  16

13

20

6

7

## Fig. 2

6

1

7

56

10

13

17  16

20

9

21

55

6

7

Fig. 3